Europäisches Patentamt

European Patent Office

Office européen des brevets

(11) Veröffentlichungsnummer: **0 422 376 A1**

# EUROPÄISCHE PATENTANMELDUNG

(21) Anmeldenummer: 90116560.5

(22) Anmeldetag: 29.08.90

(51) Int. Cl.5: **B60B 33/02, B62B 5/04**

(30) Priorität: 07.10.89 DE 3933612

(43) Veröffentlichungstag der Anmeldung:
17.04.91 Patentblatt 91/16

(84) Benannte Vertragsstaaten:
FR GB IT NL

(71) Anmelder: ROLF RODEHAU GMBH u. CO. KG

Metallwarenfabrik
Moselstrasse 3
W-6070 Langen(DE)

(72) Erfinder: Kratochwil, Rudolf
An der Flurscheid 37
W-6380 Bad Homburg-Obereschbach(DE)

(54) Vorrichtung zum Blockieren der Fahrrollen rollbarer Behälter, insbesondere Servierwagen.

(57) Die Erfindung betrifft eine Vorrichtung zum Blokkieren der Fahrrollen rollbarer Behälter, insbesondere Servierwagen.

Unterhalb des Behälterbodens (1) ist eine mit dem Bremspedal in Verbindung stehende verschiebbare Verbindungsstange vorgesehen, die mit einem Schieber (3) in Verbindung steht, der an seinem freien Ende eine Führungsplatte (4) trägt.

In der Führungsplatte (4) ist quer zur Bewegungsrichtung des Schiebers (3) eine Nut (6) eingearbeitet, in der ein Führungsbolzen (5) frei quer verschiebbar angeordnet ist.

Die Führungsplatte (4) ist in einem Kulissengehäuse (2) verschiebbar geführt, wobei die ausgearbeitete Kulisse (8), in der der Führungsbolzen (5) zwangsgeführt ist, die geometrische Form einer geschlossenen Bahn aufweist und so gestaltet ist, daß nach Betätigung des Fußhebels der Führungsbolzen (5) in einem Haltepunkt (13) arretiert wird, wobei in dieser Stellung die Blockierung der Fahrrollen wirksam ist, und bei erneuter Betätigung des Fußhebels der Führungsbolzen (5) wieder in die Ausgangsposition (9) zurückgeführt und damit die Blockierung aufgehoben wird.

Fig. 2

# VORRICHTUNG ZUM BLOCKIEREN DER FAHRROLLEN ROLLBARER BEHÄLTER, INSBESONDERE SERVIERWAGEN

Die Erfindung betrifft eine Vorrichtung zum Blockieren der Fahrrollen rollbarer Behälter gemäß dem Oberbegriff des 1. Patentanspruches.

Solche Blockiervorrichtungen sind bekannt. Insbesondere bei Servierwagen, die in Verkehrsmitteln zum Einsatz gelangen, ist es bekannt, durch eine einzige Vorrichtung ein ungewolltes Fort- oder Weiterrollen, auch bei Schräglage oder starken Schubkräften, die auf den Servierwagen wirken, mit Sicherheit zu vermeiden, indem eine oder mehrere Fahrrollen blockiert werden. Üblicherweise werden dazu mindestens alle gleichachsig gelagerten Fahrrollen oder -rollenpaare gleichzeitig abgebremst.

Aus der DE-OS 25 08 950 ist dazu eine Lösung bekannt geworden, bei der ein Fußhebel durch Niederdrücken mittels Blockierungsstangen gegen die Kraft einer oder mehrerer Rückstellfedern Blockiermittel gegen die Fahrrollen preßt. Dabei wird der für eine dauerhafte Blockierung erforderliche Bremsdruck dadurch aufrechterhalten, daß der Fußhebel in der Bremsstellung überzentert ist und in eigens dafür vorgesehenen Rastungen fixiert wird. Zum Lösen der Blockierung ist es erforderlich, den Fußhebel von unten nach oben in die Ausgangsstellung zu bewegen. Diese Bedienung ist einerseits umständlich und erfordert eine gewisse Aufmerksamkeit bei der Bedienung, die besonders in Gefahrensituationen, in denen schnelle Reaktionen erforderlich sind, nicht vorausgesetzt werden kann. Andererseits führt sie zu einem Verschleiß der Schuhspitzen des oder der Bedienenden, da zur Überwindung der kraftschlüssigen Arretierung erhebliche Rückstellkräfte von unten über die Schuhspitze auf den Fußhebel übertragen werden müssen, so daß diese Bedienung insgesamt unkomfortabel ist und nicht befriedigen kann.

Aus der DE-OS 31 31 582 und EP 0 141 270 sind Blockieranordnungen bekannt geworden, bei denen separate Brems- und Entriegelungspedale vorhanden sind oder die Arretierung des Fußhebels in Blockierstellung durch zusätzliche Mittel zur Entrastung aufgehoben werden kann. Diese Lösungen sind mechanisch aufwendig, besitzen eine große Zahl von Übertragungs- und Umlenkteilen und können ebenfalls nicht befriedigen. Die Anordnung getrennter Fußhebel für die Blockierung und deren Aufhebung erschwert die Bedienung und birgt eine Verwechslungsgefahr in Not- oder Havariesituationen in sich.

Aufgabe der Erfindung ist es demnach, eine Vorrichtung zum Blockieren der Fahrrollen anzugeben, bei der ein einziger Fußhebel durch Betätigung von oben mit der Schuhsohle in eine fixierbare Stellung gebracht werden kann, in der die Fahrrollen blockiert sind und durch erneute Betätigung von oben der Fußhebel in seine Ausgangslage zurückgeht und damit die Fahrrollen wieder freigegeben werden. Diese Betätigung soll ferner keine besondere Aufmerksamkeit bei der Bedienung, wie etwa die Beachtung eventueller Rast- oder Zwischenstellungen, erfordern.

Diese Aufgabe wird erfindungsgemäß durch die im kennzeichnenden Teil des 1. Patentanspruches aufgeführten Merkmale gelöst.

Die Vorrichtung gemäß der Erfindung bietet eine einfache und komfortable Bedienung, indem nur ein Pedal vorhanden ist, das ausschließlich von oben durch Druck der Schuhsohle betätigt wird. Dadurch ist ein ungewollter Verschleiß der Schuhe beseitigt; es entfällt auch die erforderliche Aufmerksamkeit, die bei den bekannten Lösungen notwendig war, um die Schuhspitze unter dem Pedal zu plazieren, ganz abgesehen davon, daß eine ausschließliche Kraftausübung von oben nach unten wesentlich besser den physischen Gegebenheiten beim Menschen entspricht als umgekehrt.

Ein weiterer Vorteil der Erfindung besteht darin, daß die Bedienung des Pedals in jedem Fall bis zu einem festen Druckpunkt geschieht, der eindeutig wahrnehmbar ist und Fehlbedienungen mit Sicherheit ausschließt. Der Führungsbolzen muß dabei, bis auf die entspannte Ruhelage der Bremse, ständig unter Spannung gehalten werden. Dies ist auf einfache Weise durch die Fußkraft der bedienenden Person oder durch die gegenläufige Wirkung der auf bekannte Weise angeordneten Rückholfedern, die bestrebt sind, die Bremsmittel und das Bremspedal in die Ruhelage zurückzuziehen, möglich.

Die Erfindung soll nachstehend an einem Ausführungsbeispiel näher erläutert werden.

Es zeigen

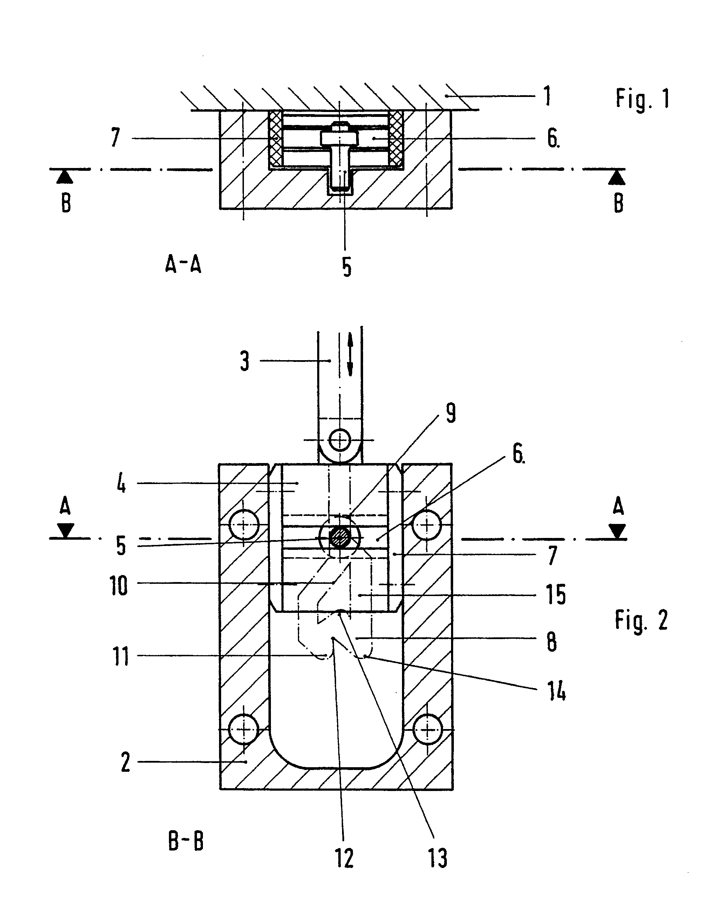

Fig. 1 die erfindungsgemäße Vorrichtung in seitlicher Schnittdarstellung

Fig. 2 dieselbe, ebenfalls geschnitten dargestellt, von oben

An der Behälterunterseite 1 ist ein Kulissengehäuse 2 angeordnet, das an einer Seite offen ist. Ein Schieber 3, der mit dem Fußhebel in Verbindung steht, trägt an seinem freien Ende, über einen Drehpunkt verbunden, eine Führungsplatte 4, die quer zur Bewegungsrichtung des Schiebers 3 mit einer Nut versehen ist, in der ein Führungsbolzen 5 frei verschiebbar angeordnet ist.

Die Führungsplatte 6 ist im Kulissengehäuse in Bewegungsrichtung des Schiebers 3 beweglich in einer Gleitführung 7 geführt.

Innerhalb des Kulissengehäuses 2 befindet sich eine Kulisse 8 in der Art, daß parallel zu der Behälterunterseite 1 eine Bahn, deren Breite in etwa der Dicke des Führungsbolzens 5 entspricht und in die der Führungsbolzen mit seinem unteren Teil eingreift, ausgearbeitet ist, so daß der Führungsbolzen 5 in dieser Kulisse 8 zwangsgeführt wird. Dabei beschreibt die Kulisse 8 eine geschlossene Bahn, auf der der Führungsbolzen 5 bewegt wird, wenn der Schieber 3 in das Kulissengehäuse 2 bewegt wird.

Diese Zwangsführung des Führungsbolzens 5 ist dadurch möglich, daß er in der Nut 6 quer zur Bewegungsrichtung des Schiebers 3 verschiebbar ist.

Die Wirkungsweise der Vorrichtung ist nun folgende:
Bei Betätigung des Fußhebels, der mit dem Schieber 3 direkt oder über ein Hebelsystem in Verbindung steht, wird der Schieber 3 und damit die an seinem freien Ende angeordnete Führungsplatte 4 mittels der Gleitführung 7 in das Kulissengehäuse 2 geschoben.

Dabei wird der Führungsbolzen 5 aus seiner Ausgangsposition 9 entlang einer Führungsnut 10, die unter einem horizontalen Winkel zur Bewegungsrichtung steht, bewegt, wobei er sich gleichzeitig in der Nut 6 der Führungsplatte 4 seitlich, in diesem Falle nach links, verschiebt. Diese Bewegung dauert an, bis der Führungsbolzen am ersten Haltepunkt 11 auftrifft. In dieser Position ist der feste Druckpunkt am Fußhebel, d.h. die Endstellung, erreicht. Wird der Fußhebel nun entlastet, so wirkt die Rückstellfeder an der Bremsvorrichtung auf den Schieber 3 entgegen der bisherigen Bewegungsrichtung; der Führungsbolzen 5 wird entlang der Leitnase 12 in der Kulisse 8 zum zweiten Haltepunkt 13 bewegt. In dieser stabilen Stellung ist die Bremse verriegelt, d.h. die Fahrrollen sind blockiert.

Zum Entriegeln erfolgt ein nochmaliger Druck auf das Bremspedal, dadurch wird die Führungsplatte 4 wiederum in das Kulissengehäuse 2 bewegt, und der Führungsbolzen 5 läuft zwangsgeführt zum dritten Haltepunkt 14, der wiederum den Druckpunkt im Fußhebel markiert. Wird der Fußhebel nun losgelassen, zieht die Kraft der Rückstellfeder an der Bremsvorrichtung den Führungsbolzen 5 entlang einer Rückführnut 15 wieder in die Ausgangsposition 9. Die Blockierung ist aufgehoben, der Fußhebel befindet sich ebenfalls wieder in der Ausgangsstellung. Der Führungsbolzen 5 durchläuft also bei einem Blockier- und Entblockierzyklus eine geschlossene Bahn in der Kulisse 8.

Dabei ist die Kulisse 8 geometrisch so gestaltet, daß der Führungsbolzen 5 zwangsweise stets in der gleichen Umlaufrichtung weiterbewegt wird, d.h. durch die Form der Kulisse 8 wird garantiert, daß stets von der Ausgangsposition 9 eine Bewegung in Richtung entgegen dem Uhrzeigersinn vollführt wird und diese Richtung auch nach dem erneuten Betätigen des Fußhebels und damit Weiterschaltens des Führungsbolzens 8 aus dem zweiten Haltepunkt 13, in dem die Blockierung der Fahrrollen wirksam ist, mit Sicherheit beibehalten wird.

Neben der hier beschriebenen Anordnung von Schieber 3 und Führungsplatte 4 ist es auch möglich, die Führungsplatte 4 direkt vom Fußpedal aus zu betätigen. In diesem Fall kann das Kulissengehäuse 2 in unmittelbarer Nähe der Halterung des Bremspedals angeordnet werden.

## Ansprüche

1. Vorrichtung zum Blockieren der Fahrrollen rollbarer Behälter, insbesondere Servierwagen, mit wenigstens einem Paar gleichachsig angeordneter abbremsbarer Fahrrollen, die nebeneinander nahe einem Behälterende angeordnet sind und jeweils ein im wesentlichen vertikal gegen die Kraft einer Rückholfeder direkt oder über ein weiteres Blockierteil auf mindestens eine Fahrrolle drückbares Bremsteil, beispielsweise einen Bremsstift, aufweisen, das durch ein, vorzugsweise an mindestens einer Stirnseite angeordnetes, Bremspedal betätigbar ist,
dadurch gekennzeichnet,
daß unterhalb des Behälterbodens (1) eine horizontale, sich in Längsrichtung des Behälters erstreckende Verbindungsstange angeordnet ist, die durch Betätigung des Bremspedals horizontal in Längsrichtung verschiebbar ist und die mit einem Schieber (3) in Verbindung steht, der an seinem freien Ende eine Führungsplatte (4) trägt,
daß die Führungsplatte (4) quer zur Bewegungsrichtung des Schiebers (3) über die gesamte Breite eine Nut (6) aufweist, in der ein Führungsbolzen (5) frei verschiebbar angeordnet ist,
daß die Führungsplatte (4) in einem Kulissengehäuse (2), das unterhalb des Behälterbodens (1) angeordnet ist, in Bewegungsrichtung des Schiebers (3) verschiebbar geführt ist, wobei der Führungsbolzen (5) in eine im Kulissengehäuse (2) ausgearbeitete Kulisse (8), deren Breite mindestens der Dicke des Führungsbolzens (5) entspricht, eingreift und in ihr zwangsgeführt wird, dergestalt, daß er bei Bewegung des Schiebers (3) und damit der Führungsplatte (4) im Kulissengehäuse (2) in seiner Lage in der Nut (6) der Führungsplatte (4) quer zur Bewegungsrichtung veränderlich ist,
daß die Kulisse (8) die geometrische Form einer geschlossenen Bahn aufweist, wobei die Bahn einen in Längsrichtung am weitesten entgegen der Bewegungsrichtung der Führungsplatte (4) angeordneten Ausgangspunkt (9) aufweist, in dem sich der Führungsbolzen (5) in der Ruhestellung befindet,

daß bei Betätigung des Bremspedals und damit Bewegung des Schiebers (3) in das Kulissengehäuse (2) hinein der Führungsbolzen (5) über eine Führungsnut (10), die einen seitlichen Winkel zur Bewegungsrichtung des Schiebers (3) aufweist, bis zu einem ersten Haltepunkt (11) und anschließend durch die Kraft der Rückholfeder mittels einer Leitnase (12) in der Kontur zu einem zweiten Haltepunkt (13) führbar und dort arretierbar ist,

daß bei nochmaliger Betätigung des Bremspedals der Führungsbolzen (5) unter Beibehaltung des Richtungssinns seiner Bewegung in der Kulisse (8) aus der Position des zweiten Haltepunktes (13) zu einem dritten Haltepunkt (14) weiterbewegbar und von dort schließlich durch die Kraft der Rückholfeder über eine Rückführnut (15) wieder in die Ruhestellung (9) bringbar ist,

daß der Führungsbolzen (5) bei jedem Bewegungszyklus vom Verlassen der Ruhestellung (9) bis zum Wiedererreichen dieser Ruhestellung (9) jeden Teil der Kulisse (8) auf einer geschlossenen Bahn durchläuft,

daß der erste und dritte Haltepunkt (11, 14) in etwa auf gleichermaßen räumlich am weitesten von der Ruhestellung (9) entfernten Punkten der Kulissenbahn liegen und der dazwischen befindliche zweite Haltepunkt (13) relativ dazu geringfügig näher an der Ruhestellung (9) liegt und

daß die Kulisse (8) so gestaltet ist, daß der Führungsbolzen (5) von dem zweiten Haltepunkt (13) zum dritten Haltepunkt (14) zwangsgeführt ist.

2. Vorrichtung nach Anspruch 1,
dadurch gekennzeichnet,
daß die Verbindungsstange über einen Hebel, der an einer Drehachse an der Behälterunterseite gelagert ist, mit dem Schieber (3) in Verbindung steht.

3. Vorrichtung nach Anspruch 1,
dadurch gekennzeichnet,
daß die Verbindungsstange selbst als Schieber (3) an ihrem freien Ende ausgebildet ist und direkt die Führungsplatte (4) trägt.

4. Vorrichtung nach Anspruch 1,
dadurch gekennzeichnet,
daß unter Weglassung von Verbindungsstange und Schieber (3) der Führungsbolzen (5) direkt vom Bremspedal betätigbar ist.

Fig. 1

1

7

6.

B

B

A-A

5

3

9

6.

4

A

A

5

7

10

15

Fig. 2

11

8

14

2

B-B

12

13

| | Europäisches Patentamt | EUROPÄISCHER RECHERCHENBERICHT | Nummer der Anmeldung<br><br>**EP 90 11 6560** |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | CH-A-2 800 75 (SCHAERER)<br>* Seite 1, Zeile 49 - Seite 2, Zeile 58; Figuren 1-4 *<br>— — — | 1,4 | B 60 B 33/02<br>B 62 B 5/04 |
| Y | CH-A-4 688 88 (TENTE-ROLLEN)<br>* Spalte 13, Zeile 18 - Spalte 14, Zeile 8; Figuren 44-47 *<br>— — — | 1,4 | |
| A | GB-A-2 057 867 (HEINRICH BUCHER)<br>* Seite 1, Zeile 106 - Seite 2, Zeile 23; Figuren 3, 4 *<br>— — — | 1 | |
| A | DE-A-3 431 073 (ROLF RODEHAU)<br>* Seite 10, Zeile 6 - Seite 12, Zeile 4; Figuren 1-4a *<br>— — — | 1 | |
| A | NL-A-7 902 877 (KOSMIS)<br>* Seite 3, Zeile 22 - Seite 4, Zeile 19; Figuren 4-7 *<br>— — — — ~ | 1 | |
| | | | **RECHERCHIERTE SACHGEBIETE (Int. Cl.5)**<br><br>B 60 B<br>B 62 B |

Der vorliegende Recherchenbericht wurde für alle Patentansprüche erstellt

| Recherchenort | Abschlußdatum der Recherche | Prüfer |
|---|---|---|
| Den Haag | 10 Januar 91 | AYITER I. |